(19) Europäisches Patentamt
European Patent Office
Office européen des brevets

(11) **EP 1 966 727 B1**

(12) **EUROPÄISCHE PATENTSCHRIFT**

(45) Veröffentlichungstag und Bekanntmachung des Hinweises auf die Patenterteilung:
**10.02.2010 Patentblatt 2010/06**

(51) Int Cl.:
*G06F 17/17* (2006.01)    *G01D 3/02* (2006.01)
*G01D 18/00* (2006.01)    *G05B 23/02* (2006.01)

(21) Anmeldenummer: **06830415.3**

(22) Anmeldetag: **06.12.2006**

(86) Internationale Anmeldenummer:
**PCT/EP2006/069370**

(87) Internationale Veröffentlichungsnummer:
**WO 2007/077087 (12.07.2007 Gazette 2007/28)**

(54) **VERFAHREN ZUR BESTIMMUNG EINES AUSGANGSWERTES EINES SENSORS DER AUTOMATISIERUNGSTECHNIK**

METHOD FOR DETERMINING AN OUTPUT VALUE FROM A SENSOR IN AUTOMATION ENGINEERING

PROCEDE DE DETERMINATION D'UNE VALEUR DE SORTIE D'UN CAPTEUR DE LA TECHNIQUE D'AUTOMATISATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **28.12.2005 DE 102005062981**

(43) Veröffentlichungstag der Anmeldung:
**10.09.2008 Patentblatt 2008/37**

(73) Patentinhaber: **Endress + Hauser Flowtec AG**
**4153 Reinach (CH)**

(72) Erfinder: **BORST, Walter**
**65626 Fachingen (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**EP-A2- 0 669 585      DE-A1- 4 323 968**
**DE-A1- 10 336 046      DE-B3- 10 339 405**
**US-A- 5 325 314**

• **HILLE P ET AL: "A LINEARISATION AND COMPENSATION METHOD FOR INTEGRATED SENSORS" SENSORS AND ACTUATORS A, ELSEVIER SEQUOIA S.A., LAUSANNE, CH, Bd. A44, Nr. 2, August 1994 (1994-08), Seiten 95-102, XP000483970 ISSN: 0924-4247**

## Beschreibung

In der Automatisierungstechnik werden vielfach Sensoren eingesetzt, die eine nichtlineare Messaufnehmer-Charakteristik aufweisen. Dabei hängt das Messsignal des Messaufnehmers nichtlinear von der zu messende Prozessvariablen, z. B. Druck oder Temperatur etc., ab. Um ein lineares Ausgangssignal des Sensors zu erhalten, z. B. für eine 4-20mA Stromschleife, ist eine Verarbeitung des Messsignals notwendig. Diese Verarbeitung erfolgt mit Hilfe einer Linearisierungskurve, die normalerweise über mehrere Stützpunkte vorgegeben ist. Da im Betrieb beliebige Punkte der Linearisierungskurve benötigt werden, ist eine entsprechende Approximation notwendig.

Eine sehr einfache Approximationsmethode ist eine lineare Interpolation. Dabei werden die Stützpunkte über Geradensücke miteinander verbunden. Diese Art der Interpolation ist aber für die Genauigkeitsanforderungen moderner Sensoren nicht ausreichend, vor allem wenn die Stützpunkte relativ weit auseinander liegen. Bessere Verfahren zur Gewinnung der Linearisierungskurve sind eine Polynom-Approximation oder eine Spline-Approximation.

Diese Approximationsverfahren erfordern jedoch einen sehr hohen Rechenaufwand. Rechenkapazitäten bei Sensor der Automatisierungstechnik sind jedoch teilweise sehr beschränkt insbesondere bei Sensoren die über die Kommunikationsverbindung versorgt werden, d. h. so genannte 2-Leiter-Geräte. Die Firma Endress + Hauser stellt eine Vielzahl solcher Sensoren her und vertreibt sie.

Ein weiterer Nachteil dieser Approximationsverfahren besteht darin, dass die ermittelte Kurve nicht exakt durch die vorgegebenen Stützpunkte geht. Es ist davon auszugehen, dass die Linearisierungskurve an den Stützpunkten exakt ist. Zusätzlich können bei einer Polynom-Approximation so genannte "Überschwinger" auftreten, die zu Ungenauigkeiten führen.

Das Dokument DE 103 36 046 A1 zeigt ein Verfahren gemäß dem Oberbegriff des Anspruchs 1.

Aufgabe der Erfindung ist es, ein Verfahren zur Bestimmung eines Ausgangswertes eines Sensors der Automatisierungstechnik anzugeben, das die oben genannten. Nachteile nicht aufweist, das insbesondere keinen großen Rechenaufwand benötigt, das an den Stützpunkten exakt ist und das möglichst genau ist.

Gelöst wird diese Aufgabe durch folgendes im Anspruch 1 angegebene Verfahren:

Verfahren zur Bestimmung eines Ausgangswertes eines Sensors der Automatisierungstechnik, der eine nichtlinearen Kennlinie aufweist, die ein funktionales Verhalten zwischen einer Eingangsgröße und einer Ausgangsgröße des Sensors beschreibt, wobei die Kennlinie Punktweise über einen Punktesatz SP von Punkten Pl-Pn vorgegeben ist und ein erweiterter Punktesatz SP' der Kennlinie K mit zusätzlichen Hilfrpunkte $H_j$ erzeugt wird,

wobei die Hilfspunkte $H_j$ über jeweils 4 benachbarte Punkte des Punktesatzes SP $P_{i+1}$, $P_{i+2}$, $P_{i+3}$, $P_{i+4}$ nach folgender Rechenvorschrift gewonnen werden:

1. Bestimmung der Steigungen m1, m2, m3 der drei Geradenstücke g1= $P_{i+1}$, $P_{i+2}$, g2 = $P_{i+2}$ $P_{i+3}$ und g3 = $P_{i+3}$ $P_{i+4}$
2. Berechnung der Steigung $m_{Pi+2}$ = (m1+m2)/2 einer ersten Hilfsgeraden h1
3. Berechnung der Steigung $m_{Pi+3}$ = (m2+m3)/2 einer zweiten Hilfsgeraden h2
4. Bestimmung des Schnittpunkts S der beiden Hilfsgeraden h1 und h2, wobei die zwei Hilfsgeraden h1 und h2 jeweils durch die Punkte $P_{i+2}$ bzw. $P_{i+3}$ gehen
5. Übernahme des Schnittpunkts S als Hilfspunkt $H_j$ in den erweiterten Punktesatz SP'

Um den Wert der Ausgangsgröße aus dem Wert der Eingangsgröße zu ermitteln, wird eine Interpolation mit mindestens zweite Punkten des erweiterten Punktesatzes SP' der Kennlinie K durchgeführt.

Vorteilhafte Weiterentwicklungen der Erfindung sind in den Unteransprüchen angegeben.

Die wesentliche Idee der Erfindung besteht darin, dass Hilfspunkte so konstruiert werden, dass die Steigungsänderung $\Delta m_j$ am Hilfspunkt $H_j$ jeweils gerade die Hälfte der Summe der Steigungsänderungen der Geradenstücke in den zwei benachbarten Punkten $P_{i+2}$, $P_{i+3}$ ist, d. h.

$$\Delta m_j = \frac{m2 - m1}{2} + \frac{m3 - m2}{2}$$

Nachfolgend ist die Erfindung anhand eines in der Zeichnung dargestellten Ausführungsbeispieb näher erläutert.

Es zeigen:

Fig. 1 Sensor der Automatisierungstechnik in

schematischer Darstellung;

Fig. 2 Konstruktion eines Hilfspunktes gemäß dem

erfindungsgemäßen Verfahren;

Fig. 3 nichtlineare Kennlinie eines Sensors.

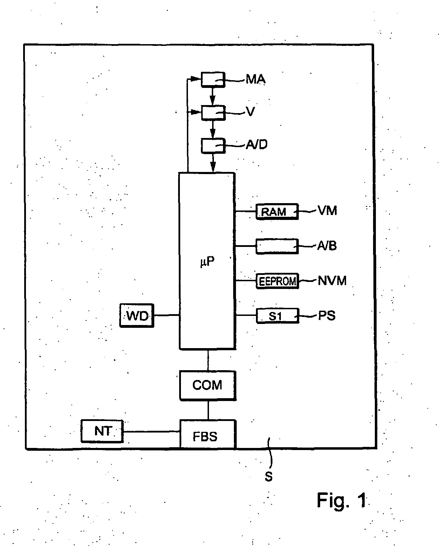

In Fig. 1 ist ein Blockschaltbild eines Sensors S der Automatisiemngstechnik näher dargestellt. Eine Mikroprozessor $\mu$P ist zur Messwertverarbeitung über einen Analog-Digital-Wandler A/D und einen Verstärker V mit einem Messaufnehmer MA verbunden, der eine Prozesswariable (z.B. Druck, Durchfluss oder Füllstand) erfasst. Der Mikroprozessor $\mu$P ist mit mehreren Speichern verbunden. Der Speicher VM dient als temporärer (flüchtiger) Arbeitsspeicher RAM. Im Speicher PS, einem Programmspeicher, sind Software oder Software-Komponenten gespeichert, die im Mikroprozessor $\mu$P ausgeführt werden.

In einem nichtflüchtigen beschreibbaren Datenspeicher NVM z.B. EEPROM-Speicher werden Parameterwerte (z.B. Kalibrierdaten, etc.) abgespeichert.

Das im Mikroprozessor $\mu$P ablaufende Programm (Firmware) definiert u. a. die anwendungsbezogenen Funktionalitäten des Feldgerätes (Messwertberechnung, Hüllkurvenauswertung, Linearisierung der Messwerte, Diagnoseaufgaben).

Weiterhin ist der Mikroprozessor $\mu$P mit einer Anzeigebedieneinheit A/B (z. b. LCD-Anzeige mit mehreren Drucktasten) verbunden, über die ein Anwender das Feldgerät manuell bedienen und Messwerte, Hüllkurven oder Parameterwerte darstellen lassen kann.

Eine Überwachungseinheit WD (Watchdog), die ebenfalls mit dem Mikroprozessor $\mu$P verbunden ist, überwacht die Funktion des Mikroprozessors $\mu$P. Kommt es aufgrund eines Systemfehlers zu einer Programmunterbrechung, so veranlasst die Überwachungseinheit WD einen Programmneustart.

Über eine Kommunikationsschnittstelle COM ist der Mikroprozessor $\mu$P mit einer externen Schnittstelle FBS verbunden. Diese dient zum Anschluss des Sensors S an eine Kommunikationsverbindung (z. B. 4-20 mA Stromschleife). Alternativ kann es bei der Kommunikationsverbindung auch um ein Feldbussystem z. B. Profibus oder Foundation Fieldbus oder eine HART-Verbindung handeln.

Versorgt wird der Sensor über ein Versorgungteil NT, das über die Kommunikationsverbindung gespeist wird (2-Draht Gerät). Alternativ ist auch eine getrennte Versorgung möglich (4-Draht Gerät).

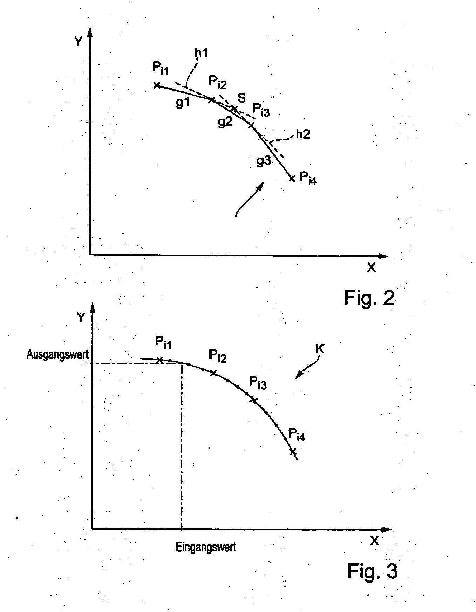

In Fig. 2 sind mehrere Punkte $P_{i1}$, $P_{i2}$, $P_{i3}$ und $P_{i4}$ einer nichtlinearen Kennlinie K in einem xy-Achsenkreuz eingezeichnet. Die entsprechenden Geradenstücke zwischen diesen Punkten sind mit g1, g2 und g3 bezeichnet. Im ersten Verfahrensschritt A werden die Steigungen m1, m2, m3 der Geraden g1, g2, g3 bestimmt.

Anschließend werden im Verfahrensschritt B und C die Steigungen $m_{Pi+2} = (m1+m2)/2$ und $m_{Pi+3} = (m2+m3)/2$ zweier Hilfsgeraden h1 und H2 berechnet.

Im Verfahrensschritt D wird der Schnittpunkt S der beiden Hilfsgeraden h1 und h2 bestimmt. Die Hilfsgeraden gehen h1 bzw. h2 gehen durch die Punkte Punkte $P_{i+2}$ bzw. $P_{i+3}$.

Im Verfahrensschritt E wird der Schnittpunkt S als neuer Hilfspunkt $H_j$ in den erweiterten Punktesatz SP' aufgenommen.

Die Steigungsänderung $\Delta m_j$ der beiden Hilfsgeraden h1 und h2 im Punkt $H_j$ ist $\Delta m_j$

$$= \frac{m2-m1}{2} + \frac{m3-m2}{2}$$

also gerade die Hälfte der Steigungsänderungen der Geradenstücke in den Punkten $P_{i+2}$ bzw. $P_{i+3}$.

Dieses Verfahren lässt sich sehr schnell und einfach durch ein entsprechendes Rechnerprogramm durchführen. Es werden nur lineare Gleichungen verwendet, deshalb benötigt das Rechenprogramm nur wendig Ressourcen des Mikroprozessors $\mu$P.

Die nichtlineare Kennlinie K kann durch eine wiederholte Durchführung des Verfahrens beliebig genau approximiert werden. Hierbei wird der Punktsatz SP jeweils um die neu gewonnen Hilfspunkte $H_j$ erweitert.

Fig. 3 zeigt eine mit dem erfindungsgemäßen Verfahren gewonnene nichtlineare Kennlinie K. Die zusätzlich gewonnen Punkte sind als kleine Kreise gezeichnet.

Sind die Punkte der nichtlinearen Kennlinie K ausreichend dicht bestimmt, so reicht eine lineare Interpolation zwischen zwei Punkten der Kennlinie aus, um zu einem Eingangswert den zugehörigen Ausgangswert mit ausreichender Genauigkeit zu bestimmen.

Das erfindungsgemäße Verfahren eignet sich besonders bei Sensoren, die einen 4-20mA-Messwertausgang besitzen. Die Erfindung ist natürlich nicht auf analoge Sensoren beschränkt, sondern sie eignet sich genauso gut für Sensoren, die einen Digitalausgang besitzen bzw. die über einen Feldbussystem Messwerte übertragen.

Das Verfahren ist besonders für Temperatursensoren, Drucksensoren oder Massedurchflussmesser geeignet.

Bei der Kennlinie K kann es sich um eine Linearisierungskurve handeln. Das Verfahren ist auch zur Approximation von Kalibrierkurven geeignet, die ebenfalls punktweise vorgegeben sind.

**Patentansprüche**

1. Verfahren zur Bestimmung eines Ausgangswertes eines Sensors der Automatisierungstechnik, der eine nichtlinearen Kennlinie aufweist, die ein funktionales Verhalten zwischen einer Eingangsgröße und einer Ausgangsgröße des Sensors beschreibt, wobei die Kennlinie Punktweise über einen Punktesatz SP von Punkten P1-Pn vorgegeben ist und ein erweiterter Punktesatz SP' der Kennlinie K mit zusätzlichen Hilfspunkte $H_j$ erzeugt wird, **dadurch gekennzeichnet, dass** die Hilfspunkte $H_j$ über jeweils 4 benachbarte Punkte des Punktesatzes SP $P_{i+1}$, $P_{i+2}$, $P_{i+3}$, $P_{i+4}$ nach folgender Rechenvorschrift gewonnen werden: Bestimmung der Steigungen m1, m2, m3 der drei Geradenstücke gl= $P_{i+1}$, $P_{i+2}$, g2 = $P_{i+2}$ $P_{i+3}$ und g3 = $P_{i+3}$ $P_{i+4}$. Berechnung der Steigung $m_{Pi+2}$ = (m1+m2)/2 einer ersten Hilfsgeraden h1, Berechnung der Steigung $m_{Pi+3}$ = (m2+m3)/2 einer zweiten Hilfsgeraden h2, Bestimmung des Schnittpunkts S der beiden Hilfsgeraden h1 und h2, wobei die zwei Hilfsgeraden h1 und h2 jeweils durch die Punkte $P_{i+2}$ bzw. $P_{i+3}$ gehen, Übernahme des Schnittpunktes S als Hilfspunkt $H_j$ in den erweiterten Punktesatz SP', und dass der Wert der Ausgangsgröße aus dem Wert der Eingangsgröße über eine Interpolation mindestens zweier Punkte des erweiterte Punktesatzes SP' der Kennlinie Kermittelt wird.

2. Verfahren nach Anspruch 1, **dadurch gekennzeichnet, dass** der erweiterte Punktesatz SP' als Punktesatz SP mit Punkten P1-Pn dient und die Rechenvorschrift wiederholt angewendet wird.

3. Verfahren nach einem der vorhergehenden Ansprüche, **dadurch gekennzeichnet, dass** der Wert der Ausgangsgröße über eine lineare Interpolation zwischen den zum Wert der Eingangsgröße benachbarten Punkten der Kennlinie erfolg.

4. Verfahren nach einem der vorhergehenden Ansprüche, **dadurch gekennzeichnet, dass** die Ausgangsgröße analog als 4-20mA Signal oder digital übertragen wird.

5. Verfahren nach einem der vorhergehenden Ansprüche, **dadurch gekennzeichnet, dass** der Sensor ein Temperatursensor, Drucksensor oder ein Massedurchflussmesser ist.

6. Verfahren nach einem der vorhergehenden Ansprüche, **dadurch gekennzeichnet, dass** die Kennlinie eine Linearisierungskurve oder eine Kalibrierkurve ist.

**Claims**

1. Method for determining an output value of an automation engineering sensor, which exhibits a non-linear curve describing the functional behavior between an input variable and an output variable of the sensor, whereby the curve is specified by points via a set SP of points P1-Pn, and an extended set of points SP' of the curve K is created with additional auxiliary points $H_j$, **characterized in that** the auxiliary points $H_j$ are obtained via four adjacent points in the set of points SP $P_{i+1}$, $P_{i+2}$, $P_{i+3}$, $P_{i+4}$ based on the following calculation rule:
Determination of the slopes m1, m2 and m3 of the three straight lines g1 = $P_{i+1}$ $P_{i+2}$, g2 = $P_{i+2}$ $P_{i+3}$ and g3 = $P_{i+3}$ $P_{i+4}$. Calculation of the slope $m_{Pi+2}$ = (m1+m2)/2 of a first auxiliary line h1, calculation of the slope $m_{Pi+3}$ = (m2+m3)/2 of a second auxiliary line h2, determining the point of intersection S of the two auxiliary lines h1 and h2, whereby the two auxiliary lines h1 and h2 go through points $P_{i+2}$ and $P_{i+3}$ respectively. Acceptance of the point of intersection S as the auxiliary point $H_j$ into the extended set of points SP', and **characterized in that** the value of the output variable is determined from the value of the input variable by interpolating at least two points of the extended set of points SP' of the curve K.

2. Method as per Claim 1, **characterized in that** the extended set of points SP' acts as a set of points SP with points P1-Pn and the calculation rule is applied repeatedly.

3. Method as per one of the previous claims, **characterized in that** the value of the output variable comes from a linear interpolation between the points of the curve adjacent to the value of the input variable.

4. Method as per one of the previous claims, **characterized in that** the output variable is transmitted via an analog system as a 4-20 mA signal or via a digital system.

5. Method as per one of the previous claims, **characterized in that** the sensor is a temperature sensor, pressure sensor or a flow sensor.

6. Method as per one of the previous claims, **characterized in that** the curve is a linearization curve or a calibration curve.

**Revendications**

1. Procédé destiné à la détermination d'une valeur de sortie d'un capteur de la technique d'automatisation, qui présente une caractéristique non linéaire, lequel procédé décrit un comportement fonctionnel entre une grandeur d'entrée et une grandeur de sortie du capteur, la caractéristique étant prédéfinie point par point par un ensemble de points SP de points P1-Pn et un ensemble de points étendu SP' de la caractéristique K étant généré avec des points auxiliaires supplémentaires, **caractérisé en ce que** les points auxiliaires sont acquis par le biais de respectivement 4 points voisins de l'ensemble de points SP $P_{i+1}$, $P_{i+2}$, $P_{i+3}$, $P_{i+4}$ d'après la prescription de calcul suivante :
Détermination des pentes m1, m2, m3 des trois segments de droite g1 = $P_{i+1}$ $P_{i+2}$, g2 = $P_{i+2}$ $P_{i+3}$ et g3 = $P_{i+3}$ $P_{i+4}$.
Calcul de la pente $m_{pi+2}$ = (m1+m2)/2 d'une première droite auxiliaire h1, calcul de la pente $m_{pi+3}$ = (m2+m3)/2 d'une deuxième droite auxiliaire h2, détermination du point d'intersection S des deux droites auxiliaires h1 et h2, les deux droites auxiliaires h1 et h2, les deux droites auxiliaires h1 et h2 passant respectivement par les points $P_{i+2}$ et $P_{i+3}$, prise en compte du point d'intersection S en tant que point auxiliaire $H_j$ dans l'ensemble de points étendu SP', et **en ce que** la valeur de la grandeur de sortie est déterminée à partir de la valeur de la grandeur d'entrée par le biais d'une interpolation d'au moins deux points de l'ensemble de points étendu SP' de la caractéristique K.

2. Procédé selon la revendication 1, **caractérisé en ce que** l'ensemble de points étendu SP' sert d'ensemble de points SP avec les points P1-Pn et que la prescription de calcul est utilisée de façon répétée.

3. Procédé selon l'une des revendications précédentes, **caractérisé en ce que** la valeur de la grandeur de sortie est déterminée par le biais d'une interpolation linéaire entre les points de la caractéristique, voisins de la valeur de la grandeur d'entrée.

4. Procédé selon l'une des revendications précédentes, **caractérisé en ce que** la grandeur de sortie est transmise au moyen d'un signal analogique 4-20 mA ou de façon numérique.

5. Procédé selon l'une des revendications précédentes, **caractérisé en ce que** le capteur est un capteur de température, un capteur de pression ou un débitmètre massique.

6. Procédé selon l'une des revendications précédentes, **caractérisé en ce que** la caractéristique est une courbe de linéarisation ou une courbe d'étalonnage.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10336046 A1